# EUROPÄISCHE PATENTSCHRIFT

(11) **EP 2 694 356 B1**
(45) Veröffentlichungstag und Bekanntmachung des Hinweises auf die Patenterteilung: **10.06.2015**
(21) Anmeldenummer: 12715037.3
(22) Anmeldetag: 04.04.2012
(51) Int. Cl.: B62D 15/02, G01C 21/32, B60Q 5/00, G08G 1/16

(54) **PARKASSISTENZSYSTEM MIT SEITENBEGRENZUNGSDETEKTION**
PARKING ASSISTANCE SYSTEM WITH LATERAL BOUNDARY DETECTION
SYSTÈME D'ASSISTANCE AU STATIONNEMENT AVEC DÉTECTION D'UNE LIMITATION LATÉRALE

(30) Priorität: 07.04.2011 DE 102011006939
(43) Veröffentlichungstag der Anmeldung: 12.02.2014
(73) Patentinhaber: Robert Bosch GmbH, 70442 Stuttgart (DE)
(72) Erfinder: SCHNEIDER, Marcus, 71642 Ludwigsburg (DE); NIEMZ, Volker, 71277 Rutesheim (DE)
(86) Internationale Anmeldenummer: PCT/EP2012/056208
(87) Internationale Veröffentlichungsnummer: WO 2012/136723

(56) Entgegenhaltungen:
- EP-A1- 2 234 085
- WO-A1-2011/029692
- DE-A1-102004 047 130
- US-A1- 2011 063 131
- US-A1- 2011 068 953

## Beschreibung

### Stand der Technik

Die Erfindung betrifft Verfahren zum assistierten Einparken, bei denen eine Seitenbegrenzung detektiert wird, die einer Parklücke gegenüber liegt, sowie derartige Parkassistenzsysteme.

Parkassistenzsysteme dienen der Entlastung des Fahrers z. B in Einparksituationen. Bei zunehmender Verkehrsdichte wird der zur Verfügung stehende Parkraum knapper und für den Fahrer wird die Suche nach einem geeigneten Parkplatz, der zu den Fahrzeugabmessungen passt, zu einer Herausforderung. Dem Fahrer wird abverlangt, trotz hohen Verkehrsaufkommens schnell zu entscheiden, ob und wie sein Fahrzeug in eine aufgefundene Parklücke passt.

Um den Fahrer zu unterstützen, vermisst ein Einparkassistent eine Parklücke bereits während der Vorbeifahrt, wozu etwa ein oder mehrere Ultraschallsensoren eingesetzt werden. Stellt der Assistent fest, dass die Parklücke geeignet ist, also etwa groß genug ist, wird die Parklücke dem Fahrer z.B. auf einem Display zur Auswahl angeboten. Bestätigt der Fahrer die Auswahl, wird das Fahrzeug basierend auf einer berechneten Einparktrajektorie in die Parklücke hineingeführt. Die Führung kann in passiver Form geschehen, d.h. der Fahrer bekommt Lenkwinkelvorgaben und/oder Losfahr- und Anhaltebefehle übermittelt. Bei einer aktiven Führung übernimmt der Einparkassistent eine Quer- und/oder Längsführung, so dass der Fahrer lediglich Losfahr- bzw. Anhaltevorgaben erhält. Hierbei steuert der Einparkassistent das Brems- und Antriebssystem des Fahrzeugs automatisch an ("Active/Passive Parking Guidance").

Moderne Parkassistenzsysteme vermessen nicht nur die Parklücke selbst (durch Detektion von parklückenbegrenzenden Objekten), sondern vermessen auch der Parklücke gegenüberliegende Objekte, d.h. solche Objekte die von der Sensorik erfasst wird, die sich auf der anderen Seite des an der Parklücke vorbeifahrenden Ego-Fahrzeugs befindet. Bei diesen Objekten handelt es sich beispielsweise um auf der gegenüberliegenden Straßenseite parkende Fahrzeuge. Auch derartige Objekte können die Verfügbarkeit eines Einparkszenarios beeinflussen. Insbesondere in einer engen Straße bzw. einer engen Fahrgasse wird die Verfügbarkeit durch gegenüberliegende Objekte wie etwa weitere geparkte Fahrzeuge begrenzt, wenn einige oder sogar alle denkbaren Einparktrajektorien versperrt werden.

Der Einparkassistent erkennt meist seitliche Objekte wie ein geparktes Fahrzeug, eine Reihe parkender Fahrzeuge, aber auch Wände, Zäune oder Absperrungen, eine Bordsteinkante, etc. zuverlässig und bietet bei zu engen Verhältnissen eine Parklücke nicht an. Ein Problem besteht jedoch darin, dass häufig auch Objekte detektiert und berücksichtigt werden, die ein Einparken gar nicht verhindern würden, weil sie das Einparken nur temporär versperren. Eine Fehlerkennung kann etwa durch Passanten ausgelöst werden, die den einer Parklücke gegenüberliegenden Freiraum scheinbar "versperren". Eine solche Situation kommt etwa in einer städtischen Umgebung, auf einem öffentlichen Parkplatz, etc. häufig vor. Daraufhin wird eine vorhandene und an sich geeignete Parklücke dem Fahrer nicht angeboten, was die Effizienz des Parkassistenzsystems verringert.

Aus der DE 10 2004 047 479 A1 ist ein Parkassistenzsystem bekannt, welches seitliche Begrenzungen einer Parklücke klassifiziert. Die Seitenbegrenzungen werden beim Vorbeifahren erfasst und ausgewertet, wodurch beispielsweise eine Unterscheidung von Wänden gegenüber Bordsteinen ermöglicht wird. Basierend auf dieser Klassifizierung kann dann ein sicheres Einparken durchgeführt werden, wobei eine Einparkktrajektorie in die Parklücke abhängig von der Klassifizierung der Seitenbegrenzung berechnet wird.

Zwar weist dieses System eine erhöhte Verfügbarkeit etwa dadurch auf, dass ein gegebenenfalls überfahrbarer Bordstein von einer Reihe parkende Fahrzeuge diskriminiert werden kann. Das Problem scheinbarer Versperrungen durch temporäre Objekte die einer Parklücke gegenüberliegend auftreten, wird dadurch aber nicht gelöst.

Die US 2011/068953 A1 ist als nächstliegender Stand der Technik nach dem Oberbegriff des Anspruchs 1 zu sehen und beschreibt ein Parkassistenzsystem, das eingerichtet ist Objekte zu detektieren, die eine Parklücke begrenzen und Objekte zu detektieren, die einer Parklücke gegenüberliegen. Das gegenüberliegende Objekt wird als statisches Objekt angenommen und mittels eines gemessenen Abstands wird berechnet, ob genug Platz zum Einparken in die Parklücke vorhanden ist. Eine Klassifizierung des detektierten Objektes als statisches Objekt oder als bewegtes Objekt findet nicht statt.

Aus der DE 102004047130 A1 ist eine Umgebungsmodellierung für autonome mobile Systeme bekannt. Dabei werden Objekte in der Umgebung eines Fahrzeugs durch Sensoren erfasst und jeweils als statisches Objekt oder als bewegtes Objekt klassifiziert. Dabei werden die Objekte bevorzugt schematisiert als Kantenzüge, Polyeder oder Polygone gespeichert.

### Offenbarung der Erfindung

Erfindungsgemäß wird ein Verfahren in einem Parkassistenzsystem zur Ermittlung einer zum Einparken geeigneten Parklücke vorgeschlagen, welches die folgenden Schritte umfasst: Detektieren mindestens eines Objekts, das einer Parklücke gegenüber liegt; Klassifizieren des detektierten Objekts als statisches Objekt oder als bewegtes Objekt; und selektives Anbieten der Parklücke basierend auf der Klassifizierung.

Wird beispielsweise ein detektiertes Objekt als bewegtes Objekt klassifiziert, kann es bei der Berechnung möglicher Einparktrajektorien ignoriert werden. Dadurch können Einparkszenarien möglich werden, die bei einer Klassifizierung als statisches Objekt durch dieses versperrt wären.

Bei bestimmten Varianten des erfindungsgemäßen Verfahrens wird die Klassifizierung als statisches oder bewegtes Objekt in Reaktion auf eine Feststellung ausgelöst, dass das detektierte Objekt eine Einparktrajektorie in die ansonsten als geeignet vermessene Parklücke versperrt. Ein Klassifizierungsalgoritmus wird also bspw. ereignisbezogen durchgeführt. Bei anderen Varianten wird eine erfindungsgemäße Klassifizierung permanent ausgeführt und könnte z.B. jeder Berechnung von Einparktrajektorien vorgelagert sein.

Die Klassifizierung des detektierten Objekts wird erfindungsgemäß basierend auf einer Konturlinie des Objekts durchgeführt, wobei die Konturlinie während einer Vorbeifahrt an der Parklücke erfasst wird. Die Konturlinie kann etwa mehrere Punkte umfassen. Jeder Punkt kann einen Vermessungsabstand zu einem Objekt während der Vorbeifahrt repräsentieren. Hierbei kann die Konturlinie, d.h. die Punktmenge beispielsweise fahrzeugfest oder raumfest ermittelt werden. Sollen die Messpunkte raumfest repräsentiert werden, kann in die dazu erforderlichen Berechnungen die Annahme einfließen, dass sich das Ego-Fahrzeug in gerader Vorbeifahrt an der Parklücke befindet. Zur Position bzw. Bewegung des Ego-Fahrzeugs können aber auch Daten etwa von Lenkwinkel- und/oder Radsensoren herangezogen werden.

Bei bestimmten Ausführungsformen des erfindungsgemäßen Verfahrens wird die Klassifizierung des detektierten Objekts bzw. der detektierten Objekte basierend auf einem geradlinigen Verlauf der Konturlinie durchgeführt. Unter 'geradlinig' ist zu verstehen, dass sich die Messpunkte entlang einer mehr oder weniger geraden Linie befinden. Wird festgestellt, dass die Konturlinie geradlinig ist, handelt es sich bei dem detektierten Objekt mit großer Wahrscheinlichkeit um einen Bordstein, eine Wand, oder eine Reihe parkender Fahrzeuge, also um ein statisches Objekt bzw. eine Reihe mehrerer statischer Objekte. Verläuft die gemessene Konturlinie nicht geradlinig, betreffen zumindest einige der Messpunkte wahrscheinlich ein bewegtes Objekt wie etwa einen Fußgänger oder Fahrradfahrer. Dieses Objekt versperrt mögliche Einparktrajektorien nur temporär und kann daher bei der Berechnung ignoriert werden.

Einige Ausführungsformen des erfindungsgemäßen Verfahrens führen eine Klassifizierung basierend auf einem vordefinierten Schwellenwert durch, der eine Schwankungsbreite der die Konturlinie ausmachenden Vermessungswerte bzw. Vermessungsabstände betrifft. Übersteigt die Schwankungsbreite, d.h. ein "Rauschen" in den Messwerten, den Schwellenwert, wird auf das Vorliegen mindestens eine bewegten bzw. dynamischen Objekts geschlossen, welches bei der Entscheidung ignoriert wird, ob eine Parklücke dem Fahrer angeboten werden soll.

Erfindungsgemäß wird weiterhin ein Computerprogramm vorgeschlagen, gemäß dem eines der hierin beschriebenen Verfahren durchgeführt wird, wenn das Computerprogramm auf einer programmierbaren Computereinrichtung ausgeführt wird. Bei der Computereinrichtung kann es sich beispielsweise um ein Modul zur Implementierung eines Parkassistenzsystems in einem Fahrzeug handeln. Das Computerprogramm kann auf einem maschinenlesbaren Speichermedium gespeichert werden, etwa auf einem permanenten oder wiederbeschreibbaren Speichermedium in Zuordnung zu einer Computereinrichtung wie einer entfernbaren CD-ROM, DVD oder einem USB-Stick. Zusätzlich oder alternativ kann das Computerprogramm auf einer Computereinrichtung wie etwa einem Server zum Herunterladen bereitgestellt werden, z.B. über ein Datennetzwerk wie etwa das Internet oder eine Kommunikationsverbindung wie etwa eine Telefonleitung und/oder eine drahtlose Verbindung.

Erfindungsgemäß wird weiterhin ein Parkassistenzsystem vorgeschlagen, das zur Ermittlung einer zum Einparken geeigneten Parklücke ausgebildet ist und die folgenden Komponenten umfasst: Eine Komponente zum Detektieren mindestens eines Objekts, das einer Parklücke gegenüber liegt; eine Komponente zum Klassifizieren des detektierten Objekts als statisches Objekt oder als bewegtes Objekt; und eine Komponente zum selektiven Anbieten der Parklücke basierend auf der Klassifizierung.

Ausführungsformen des erfindungsgemäßen Parkassistenzsystems können beispielsweise zur aktiven Führung eines Fahrzeugs in die Parklücke ausgebildet sein. Zusätzlich oder alternativ kann das erfindungsgemäße Park-Assistenzsystem etwa mit einer Ultraschallsensorik zur Umfeld- bzw. Objektdetektion ausgerüstet sein. Die Sensorik kann beispielsweise einen oder mehrere Ultraschallsensoren umfassen, die eine rückwärtige Fahrzeugumgebung erfassen und/oder einen oder mehrere Ultraschallsensoren, die einen vorderen Umgebungsbereich umfassen. In das erfindungsgemäße Verfahren kann insbesondere mindestens ein Ultraschallsensor im hinteren, seitlichen oder vorderen Fahrzeugbereich involviert sein, der einen zumindest teilweise seitlichen Erfassungsbereich hat.

### Vorteile der Erfindung

Die Erfindung ermöglicht insbesondere in einem engen Fahrzeugumfeld wie beispielsweise einer engen Fahrgasse eine zuverlässigere Erkennung von geeigneten Einparkszenarien bzw. eine zuverlässigere Diskriminierung von geeigneten gegenüber ungeeigneten Einparkszenarien. Die Bewertung der Situation in Bezug auf statische versus bewegte seitlich begrenzende Objekte ermöglicht es dem Einparkassistenten, vermehrt Parkmöglichkeiten anzubieten, was den Nutzwert des assistierten Einparkens erhöht, und damit auch die Akzeptanz von entsprechenden Assistenten. Situationen, bei denen bewegte Objekte eine Trajektorie scheinbar versperren treten in einem städtischen Umfeld häufig auf und ein erfindungsgemäß weitergebildeter Einparkassistent kann somit zu einer relevanten Verbesserung beitragen.

Der erhöhten Systemverfügbarkeit stehen dabei i.d.R. keine zusätzlichen Montageaufwände gegenüber, da keine zusätzlichen Sensoren, Module oder sonstigen Komponenten verbaut werden müssen. Die meisten Fahrzeuge verfügen heute über eine Sensorik mit seitlichem Erfassungsbereich. In der Regel sind Ultraschalldaten zur Vermessung der gegenüberliegenden Seite somit einfach ermittelbar oder werden ohnehin bereits ermittelt, so dass für die Erfindung im Wesentlichen zusätzliche Auswertungsalgorithmen zu implementieren sind. Das erfindungsgemäße Verfahren kann daher auch einfach und kostengünstig nachgerüstet werden.

### Kurze Beschreibung der Zeichnungen

Weitere Aspekte und Vorteile der Erfindung werden nunmehr anhand der beigefügten Figuren eingehender beschrieben. Hierbei zeigt:
- Fig. 1: ein mit einem erfindungsgemäßen Parkassistenzsystem ausgerüstetes Fahrzeug in einer beispielhaften Einparksituation in einem engen Umfeld;
- Fig. 2: eine schematische Darstellung funktionaler Komponenten des Parkassistenzsystems aus Fig. 1;
- Fig. 3: in Form eines Flussdiagramms eine Arbeitsweise des Parkassistenzsystems aus Fig. 2; und
- Fign. 4A, 4B: zwei weitere, beispielhafte Einparksituationen zur Erläuterung der Arbeitsweise des Parkassistenzsystems der Fign. 2, 3.

### Ausführungsformen der Erfindung

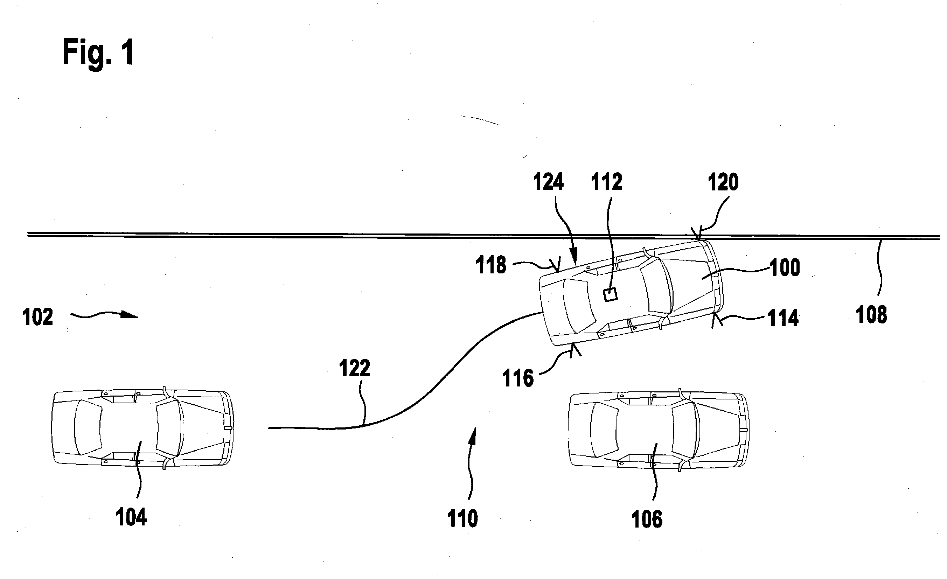

In Fig. 1 ist in schematischer Darstellung ein Fahrzeug 100 in einem engen Fahrzeugumfeld angedeutet. Eine vergleichsweise enge (in Bezug auf die Abmessungen des Fahrzeugs 100) Fahrgasse 102 wird durch parkende Fahrzeuge 104, 106 sowie auf der gegenüberliegenden Seite von einem Bordstein 108 begrenzt. Zwischen den Fahrzeugen 104, 106 befindet sich eine Parklücke 110.

Der Einparkassistent 112 des Fahrzeugs 100 hat bei der Vorbeifahrt die Parklücke 110 mittels zweier Ultraschallsensoren 114, 116 mit seitlichem Erfassungsbereich ausgemessen. Aus der Vermessung hat sich ergeben, dass die Parklücke 110 von ihren Abmessungen her an sich für das Fahrzeug 100 geeignet wäre. Allerdings haben gegenüberliegende Ultraschallsensoren 118, 120 den Bordstein 108 erfasst, der die in Fig. 1 angedeutete Trajektorie 122 versperrt. Erfindungsgemäß hat der Einparkassistent 112 das Objekt 108 aufgrund seiner geradlinigen Kontur als statisches Objekt klassifiziert. Daher wird das Objekt 108 in einem Algorithmus zur Bewertung möglicher Szenarien zum Einparken in die Parklücke 110 berücksichtigt. Ist insbesondere ein Einparken entlang der Trajektorie 122 ohne Überfahren des Borsteins 108 unmöglich, wie durch die Darstellung des Fahrzeugs 100 in der Position 124 veranschaulicht, wird der Einparkassistent 112 die Parklücke 110 dem Fahrer des Fahrzeugs 100 nicht zum Einparken anbieten.

Die Berechnung von Einparktrajektorien ist nicht Gegenstand der Erfindung und wird daher nicht weiter diskutiert. Nachfolgend werden Beispiele für eine Arbeitsweise des Einparkassistenten 112 in Bezug auf die Erkennung und Bewertung von die Seite einer Fahrgasse begrenzenden, statischen Objekten (wie der Bordsteinkante 108) oder bewegten Objekten genauer diskutiert.

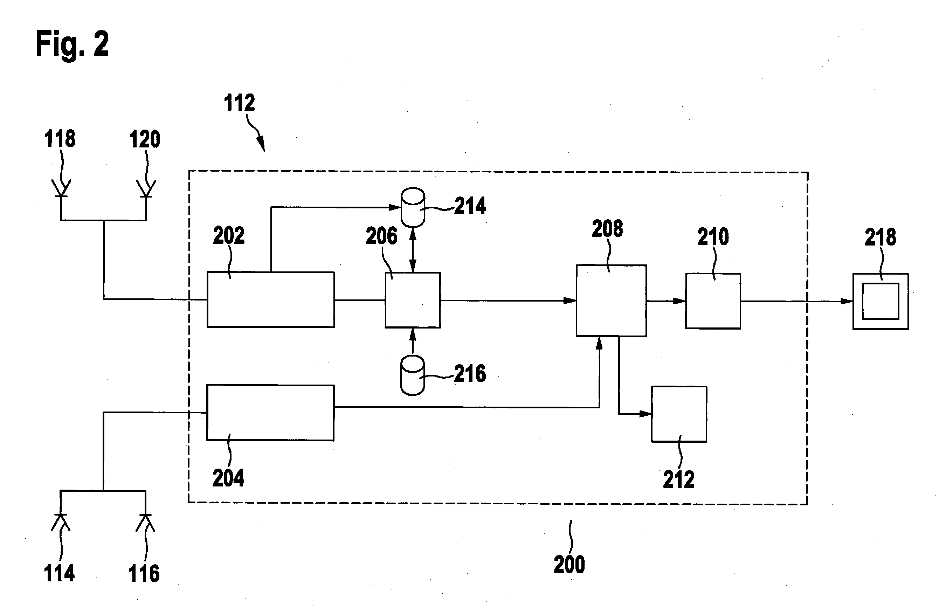

Fig. 2 zeigt in Form eines schematischen Blockschaltbildes funktionale Komponenten des Parkassistenzsystems 112 des Fahrzeugs 100 aus Fig. 1. Das System 112 umfasst neben den Ultraschallsensoren 114, 116, 118, 120 eine zentrale Verarbeitungskomponente 200, die beispielsweise in Form einer ECU ("Electronic Control Unit") im Fahrzeug 100 vorliegen kann. Die ECU 200 umfasst eine Seitenvermessungskomponente 202, eine Parkraumvermessungskomponente 204, eine Klassifizierungskomponente 206, eine Steuerkomponente 208, eine Ausgabekomponente 210, sowie eine Aktivsteuerungskomponente 212.

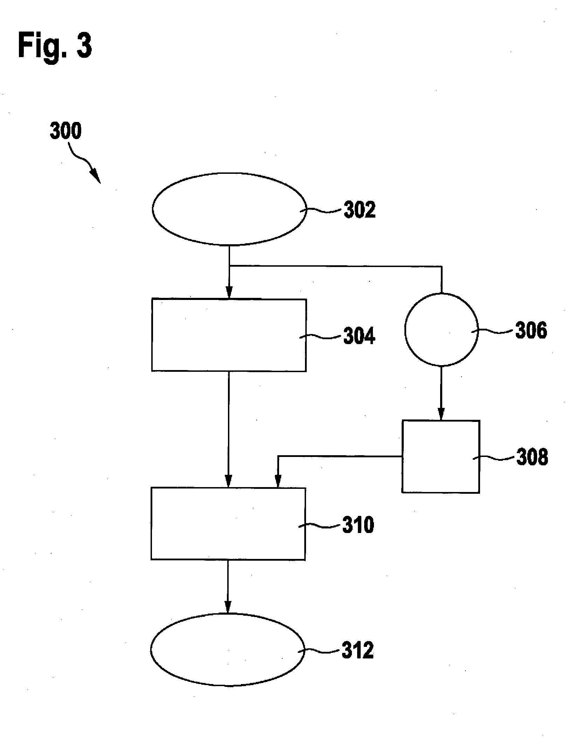

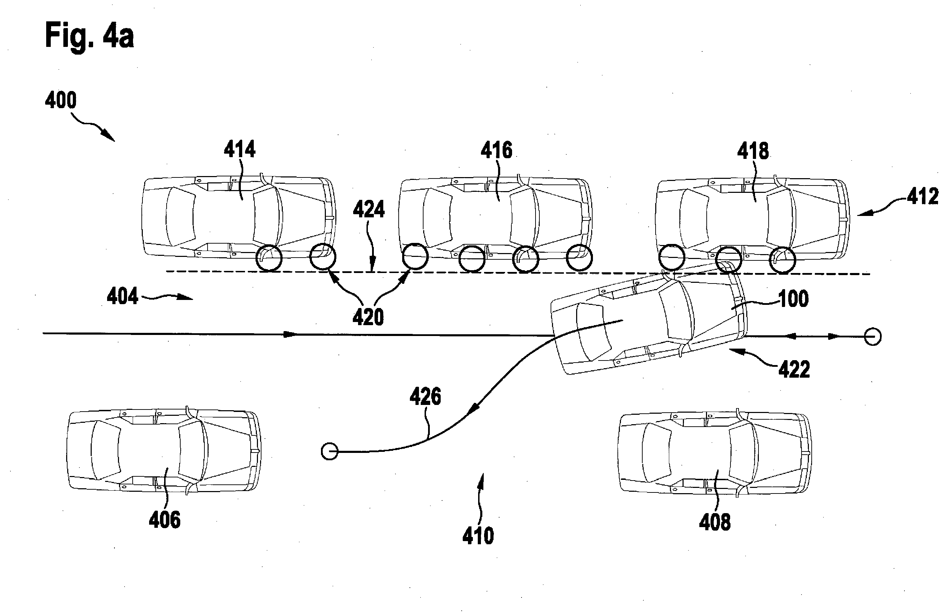

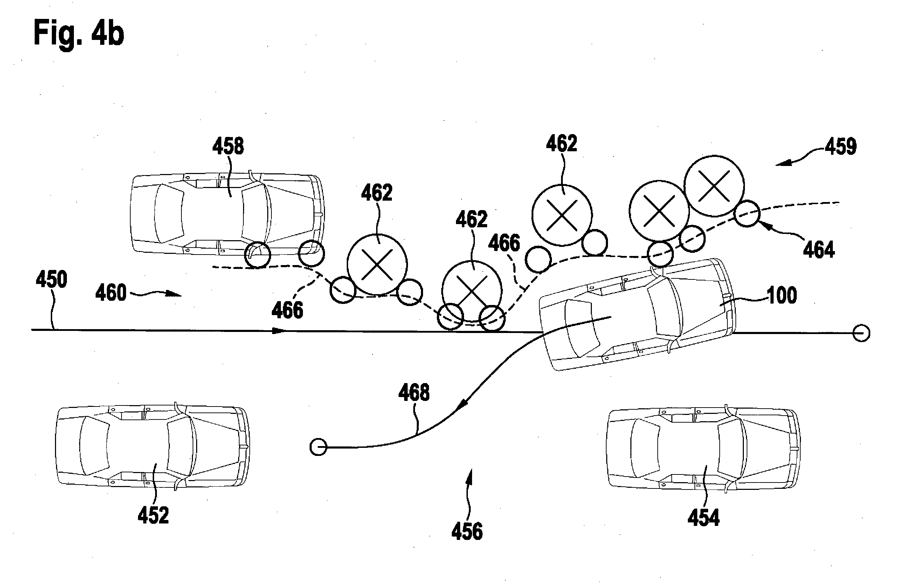

Eine Funktionsweise und ein Zusammenwirken der in Fig. 2 gezeigten Komponenten wird nachfolgend mit Bezug auf das Flussdiagramm in Fig. 3 beschrieben. Allgemein ist das Parkassistenzsystem 112 ausgebildet, um eine zum Einparken geeignete Parklücke auch in einem engen Fahrzeugumfeld wie der engen Fahrgasse 102 aus Fig. 1 zu finden (302). Mögliche Abläufe des Verfahrens werden dabei in Bezug auf die Beispielsituation in Fig. 1 und darüberhinaus in Bezug auf die Beispielszenarien in den Fign. 4A und 4B diskutiert.

In der in Fig. 4A gezeigten Szenario 400 bewegt sich das Fahrzeug 100 entlang einer Trajektorie 402 durch eine enge Fahrgasse 404. Das Fahrzeug fährt an Fahrzeugen 406 und 408 vorbei und vermisst dabei mittels der in den Fign. 1 und 2 angedeuteten Ultraschallsensorik 114, 116 sowie der zugeordneten Vermessungskomponente 204 (Fig. 2) die Parklücke 410 (Schritt 304). Parallel dazu vermisst im Schritt 306 die Ultraschallsensorik 118, 120 und die Seitenvermessungskomponente 202 das der Parklücke 410 gegenüberliegende Umfeld 412. Dieses umfasst abgestellte bzw. geparkte Fahrzeuge 414, 416, 418. Mindestens einer der Ultraschallsensoren 118, 120 ist zumindest während der Vorbeifahrt an der momentan vermessenen Parklücke 410 aktiv. Es ergibt sich eine Sequenz von Messpunkten 420, wobei jeder Messpunkt 420 einen Abstandswert zu einem Objekt repräsentiert, sofern sich ein solches im Erfassungsbereich der Sensorik befindet.

Die aus den Sensordaten berechneten, die Messpunkte 420 repräsentierenden Daten werden in einem Zwischenspeicher ("Buffer") 214 (Fig. 2) abgelegt. Die Messwerte 420 können als Abstandswerte im Speicher 214 repräsentiert sein, so wie sie von der Ultraschallsensorik ermittelt wurden, oder auch als korrigierte Abstandswerte, die einen Abstand zu einem virtuellen Fahrzeugzentrum oder einer parallel zur Trajektorie 402 liegenden Fahrzeugzentralachse angeben (dies wäre sinnvoll, wenn Messwerte durch mehrere Ultraschallsensoren an unterschiedlichen Einbaupositionen am Fahrzeug 100 ermittelt werden). Für die weitere Auswertung kann es auch vorteilhaft sein, wenn die Messpunkte 420 raumfest repräsentiert sind. Dazu kann die Komponente 202 ggf. Daten weiterer Sensoren (in Fig. 2 nicht gezeigt) heranziehen, etwa von GPS-, Lenkwinkel- und/oder Radsensoren. Die Messpunkte können etwa als raumfeste Punkte in einem raumfesten Koordinatensystem repräsentiert sein, das vom Einparkassistenten 112 in Bezug auf die Parklücke 410 unterhalten wird.

Nach der Vorbeifahrt und Vermessung der Parklücke 410 befindet sich das (Heck des) Fahrzeugs 100 bspw. in einer Position 422 (Fahrzeugkonturen wurden der Übersichtlichkeit halber weggelassen). Die Messdaten werden von der Klassifizierungskomponente 206 zur Auswertung aus dem Speicher 214 angezogen. Bei der Auswertung der Messpunkte 420 wird das von der Sensorik detektierte Objekt (das im Beispielszenario der Fig. 4A die drei Fahrzeuge 414, 416 und 418 umfasst), auf seine "Geradlinigkeit" hin untersucht, d.h. es wird analysiert, ob eine Konturlinie 424 (in Fig. 4A gestrichelt angedeutet), welche die Messpunkte 420 miteinander verbindet, im wesentlichen geradlinig, d.h. parallel zur Trajektorie 402 des Fahrzeugs 100 verläuft oder nicht.

Bei einem einfachen Ansatz könnte zur Bestimmung der Geradlinigkeit beispielsweise von einer exakten Geradeausfahrt des Fahrzeugs 100 ausgegangen werden, so dass sich eine Geradlinigkeit der Konturlinie 424 unmittelbar aus den Messwerten 420 ergibt. Bei einem genaueren Ansatz können eventuelle Abweichungen der Trajektorie 402 von einer geraden Vorwärtsfahrt berücksichtigt werden, um die gemessenen Werte der Messpunkte 420 entsprechend zu korrigieren.

Die von der Klassifizierungskomponente 206 vorgenommene Auswertung kann den vorgelagerten Schritt umfassen, festzustellen, ob im Erfassungsbereich der Sensorik 118, 120 während der Vorbeifahrt an der Parklücke 410 überhaupt Objekte detektiert werden. Ist dies der Fall, kann gegebenenfalls ein weiterer Auswertungsalgorithmus feststellen, ob es sich um beachtliche Objekte im Hinblick darauf handelt, ob diese überfahren werden können oder nicht. Ein derartiger optionaler Algorithmus könnte beispielsweise zwischen einem Bordstein als u. U. (je nach Höhe) unbeachtlichem Hindernis (vgl. Fig. 1, wobei oben angenommen wurde, dass der Bordstein 108 eine beachtliche Höhe haben soll) und parkenden Fahrzeugen als beachtlichen Hindernissen (vgl. Fig. 4A) unterscheiden.

Nachgelagert oder parallel zu der vorstehend beschriebenen Auswertung wird erfindungsgemäß das gegenüber der vermessenen Parklücke 410 liegende Objekt bzw. Umfeld 412 klassifiziert, und zwar im Hinblick darauf, ob es sich um ein statisches oder ein bewegtes Objekt handelt. Unter erneuter Bezugnahme auf Fig. 4A wird hierbei die oben diskutierte Geradlinigkeit der Konturlinie 424 in der folgenden Weise herangezogen: In einem internen Speicher 216 ist ein vordefinierter Schwellenwert abgelegt, der eine Geradlinigkeit der Konturlinie 424 evaluierbar macht. Der Schwellenwert repräsentiert ein "Rauschen" der Messpunkte 420 in Bezug auf bspw. eine Abweichung der Messpunkte 420 bzw. der Konturlinie 424 von einer Geraden die sich parallel zur Trajektorie 402 erstreckt.

Sind die Messpunkte bspw. als raumfeste Abstände zu einer zur Fahrtrichtung parallelen Fahrzeugzentralachse abgelegt, sollte das Rauschen der Messpunkte in der Situation der Fig. 1 sehr gering sein, d.h. die Messpunkte sollten kaum um einen Mittelwert schwanken, der den konstanten Abstand des Fahrzeugs 100 von der kontinuierlich verlaufenden Bordsteinkante 108 während der Vorbeifahrt an der Parklücke 110 widerspiegelt. Übersteigen die Abweichungen der Messpunkte 420 das durch den Schwellenwert im Speicher 216 repräsentierte Maß, wird erfindungsgemäß davon ausgegangen, dass es sich bei dem durch die Sensorik 118, 120 detektierten Objekt bzw. Umfeld um ein dynamisches Objekt handelt, das einem Einparken nicht entgegensteht, weil es die Einparktrajektorie 426 (Fig. 4A) nur temporär versperrt. Ein Beispiel hierfür ist in Fig. 4B gezeigt und wird nachfolgend besprochen. In Bezug auf die Fig. 4A wird angemerkt, dass hier die Konturlinie 424 also noch in ausreichendem Maße geradlinig erkannt werden sollte; d.h. das "Rauschen" der Messpunkte 420 sollte noch den durch den Schwellenwert im Speicher 216 angegebene Maß unterschreiten. In diesem Falle wird der Einparkassistent bei der weiteren Evaluierung davon ausgehen, dass eine statische Seitenbegrenzung vorliegt, also beispielsweise wie in der Fig. 4A skizziert eine Kette parkender Fahrzeuge. Diese statischen Objekte sind bei der Berechnung der Einparktrajektorie 426 zu berücksichtigen und können insbesondere, wie in Fig. 4A gezeigt, die Einparktrajektorie versperren; in Fig. 4A verhindert das Fahrzeug 418, dass das Fahrzeug 100 in der engen Gasse 404 genügend ausschwenken kann, um entlang der Trajektorie 426 in die Parklücke 410 hineinzugelangen.

Im Schritt 310 nimmt die Steuerkomponente 208 die Auswertungsergebnisse der Komponenten 206 und 204 entgegen. Die Komponente 208 entscheidet, basierend auf den Messergebnissen der Komponente 204, ob die Parklücke 410 von ihren Abmessungen her ausreichend ist, um das Fahrzeug 100 aufzunehmen. Ist dies der Fall, werden von der Komponente 206 Daten über das der der Parklücke 410 gegenüber liegende Umfeld 412 entgegengenommen.

In dem Beispielszenario der Fig. 4A hat die Komponente 206 festgestellt, dass es im Umfeld 412 mindestens ein statisches Objekte vorliegt, das bei der Berechnung möglicher Einparktrajektorien zu berücksichtigen ist. Im Falle der Fig. 4A wird daher die Komponente 208 entscheiden, dass es keine denkbaren Einparktrajektorien gibt, da z.B. die Trajektorie 426 durch das statische Umfeld 412 (das Fahrzeug 418) versperrt wird. Somit wird die Parklücke 410 dem Fahrer des Fahrzeugs 100 nicht angeboten. Das Verfahren endet im Schritt 312 etwa damit, dass der Einparkassistent 112 in den Suchmodus zurückkehrt, in dem etwa nur der Ultraschallsensor 116 das vordere rechte Umfeld des Fahrzeugs 100 nach einer Parklücke abtastet.

Nachfolgend wird wiederum basierend auf dem Flussdiagramm 300 aus Fig. 3 die Arbeitsweise des Parkassistenzsystems 112 in dem Beispielszenario der Fig. 4B diskutiert. Im Schritt 304 vermisst die Ultraschallsensorik 114, 116 des Fahrzeugs 100 bei der Fahrt entlang der Trajektorie 450 die zwischen den Fahrzeugen 452 und 454 befindliche Parklücke 456. Unmittelbar nach der erstmaligen Erfassung der Parklücke 456 mit dem Sensor 116 wird auch die Ultraschallsensorik 118, 120 sowie die Vermessungskomponente 202 aktiviert. Die internen Abläufe in den Schritten 304 und 306 entsprechen den oben bereits geschilderten Abläufen. Die Situation in der Fig. 4B unterscheidet sich von derjenigen in der Fig. 4A aber dadurch, dass linkerhand des Fahrzeugs 100 im Umfeld 459 nur ein einzelnes Fahrzeug 458 die Fahrgasse 460 begrenzt, sich allerdings während der Vorbeifahrt des Fahrzeugs 100 Objekte 462 vor dem Fahrzeug 458 bewegen.

Bei den Objekten 462 kann es sich um eine Person oder mehrere Personen handeln. Die entsprechenden Messpunkte 464 sowie die resultierende Konturlinie 466 sind in Fig. 4B angedeutet. Die in Schritt 308 vorgenommene Klassifizierung betrifft wieder eine "Geradlinigkeit" der Konturlinie 466, die anhand des Schwellenwertes bewertet wird, der im Speicher 216 abgelegt ist. Der Schwellenwert ist zweckmäßigerweise so festgelegt, dass das "Rauschen" der Messpunkte 464 im Beispielszenario der Fig. 4B größer ist als der Schwellenwert. Daraus wird geschlossen, dass das detektierte Umfeld 459 mindestens ein bewegtes Objekt umfasst. Tatsächlich umfasst das Umfeld 459 links des Fahrzeugs 100 das Fahrzeug 458 als statisches (und geradliniges) Objekt, aber auch die sich bewegende Person 462. Diese Person versperrt Einparktrajektorien in die Parklücke 456 nur scheinbar bzw. temporär. Ist der Schwellenwert im Speicher 216 geeignet gewählt, kann aus dem detektierten "Rauschen" der Messpunkte 464 somit zutreffend geschlossen werden, dass kein beachtliches Einparkhindernis gegenüber der Parklücke 456 (d.h. auf der linken Seite der Fahrbahn 460) vorliegt.

Dieses Auswertungsergebnis wird von der Komponente 206 an die Steuerkomponente 208 übermittelt. Diese entscheidet daraufhin (sofern die Parklücke 456 von den Abmessungen her ausreichend groß ist), dem Fahrer des Fahrzeugs 100 die Parklücke 456 zum Einparken anzubieten. Die in der Fig. 4B gezeigte Einparktrajektorie 468, die ein Ausschwenken des Fahrzeugs 100 wie in der Position 470 gezeigt beinhaltet, wird als nicht versperrt angesehen, da die Messpunkte 464 als dem Einparken nicht entgegenstehend beurteilt werden.

Die Steuerkomponente 208 steuert dementsprechend die Ausgabekomponente 210 an, die dem Fahrer auf einer Anzeigekomponente 218 beispielsweise die Trajektorie 468 wie in Fig. 4B dargestellt zur Auswahl zur Anzeige bringt. Gleichzeitig kann die Steuerkomponente 208 die Einparktrajektorie 468 betreffende Daten an die Aktivsteuerkomponente 212 des Parkassistenten 112 bereitstellen, um ein aktiv geführtes Einparken des Fahrzeugs 100 in die Parklücke 456 vorzubereiten, sofern der Fahrer dem Vorschlag zustimmt.

Während in den geschilderten Beispielen von einer Ultraschallsensorik zur Umfelderkennung ausgegangen wurde, kann eine Vermessung von Parklücken und dem der Parklücke (auf der anderen Seite des Ego-Fahrzeugs) gegenüberliegenden Umfeld zusätzlich oder alternativ auch auf anderen Sensortechnologien basieren, beispielsweise auf Infrarot, Radar, etc.

Für das Parkassistenzsystems 112 wurde beschrieben, dass eine Klassifizierung des gegenüberliegenden seitlichen Umfelds 412, 459 unbedingt während einer Vermessung des Parkraums 410, 456 durchgeführt wird. Jedoch kann die Klassifizierung auch erst konditional (nachgelagert) stattfinden, nachdem festgestellt wurde, dass die vermessene Parklücke groß genug für das Ego-Fahrzeug ist.

Eine Filterung des Merkmals "Seitenbegrenzendes Objekt erkannt" kann auch so erfolgen, dass eine Objektlage des seitenbegrenzenden Objekts lediglich in einem fahrzeugfesten Koordinatensystem festgestellt wird; hierbei entfallen Umrechnungsschritte zur Transformation der gemessenen Abstände 420, 464 in ein raumfestes Koordinatensystem. Je nach der anzustrebenden Genauigkeit kann unter der Annahme, dass eine Vorbeifahrt an einer Parklücke in der Regel im Wesentlichen geradlinig erfolgt, das erfindungsgemäße Verfahren entsprechend vereinfacht werden.

Die Erfindung ist nicht auf die hier beschriebenen Ausführungsbeispiele und die darin hervorgehobenen Aspekte beschränkt; vielmehr sind innerhalb des durch die anhängenden Ansprüche angegebenen Bereichs eine Vielzahl von Abwandlungen möglich, die im Rahmen fachmännischen Handelns liegen.

## Patentansprüche

1. Verfahren in einem Parkassistenzsystem zur Ermittlung einer zum Einparken geeigneten Parklücke, mit den folgenden Schritten:
- Detektieren mindestens eines Objekts, das einer Parklücke gegenüberliegt;
- Klassifizieren des detektierten Objektes als statisches Objekt oder als bewegtes Objekt; und
- selektives Anbieten der Parklücke basierend auf der Klassifizierung
**dadurch gekennzeichnet, dass** die Klassifizierung des detektierten Objekts basierend auf einer Konturlinie des Objekts durchgeführt wird, die während einer Vorbeifahrt an der Parklücke erfasst wird.

2. Verfahren nach Anspruch 1, wobei der Schritt der Klassifizierung in Reaktion auf eine Feststellung durchgeführt wird, dass das detektierte Objekt eine Einparktrajektorie in die Parklücke versperrt.

3. Verfahren nach Anspruch 1 oder 2, wobei die Konturlinie den Vermessungabstand des detektierten Objekts während gerader Vorbeifahrt betrifft.

4. Verfahren nach einem der Ansprüche 1 bis 3, wobei die Klassifizierung basierend auf einem geradlinigen Verlauf der Konturlinie durchgeführt wird.

5. Verfahren nach Anspruch 4, wobei die Klassifizierung basierend auf einem vordefinierten Schwellenwert durchgeführt wird, der eine Schwankungsbreite der die Konturlinie ergebenden Vermessungsabstände betrifft.

6. Computerprogramm zur Durchführung des Verfahrens nach einem der vorhergehenden Ansprüche, wenn das Computerprogramm auf einer programmierbaren Computereinrichtung ausgeführt wird.

7. Parkassistenzsystem ausgebildet zur Ermittlung einer zum Einparken geeigneten Parklücke, mit den folgenden Komponenten:
- einer Komponente zum Detektieren mindestens eines Objekts, das einer Parklücke gegenüberliegt;
- einer Komponente zum Klassifizieren des detektierten Objektes als statisches Objekt oder als bewegtes Objekt; und
- einer Komponente zum selektiven Anbieten der Parklücke basierend auf der Klassifizierung
**dadurch gekennzeichnet, dass** die Klassifizierung des detektierten Objekts basierend auf einer Konturlinie des Objekts durchgeführt wird, die während einer Vorbeifahrt an der Parklücke erfasst wird.

8. Parkassistenzsystem nach Anspruch 8, ausgebildet zur aktiven Führung eines Fahrzeugs in die Parklücke.

9. Parkassistenzsystem nach Anspruch 8 oder 9, umfassend eine Ultraschallsensorik zur Objektdetektion.

## Claims

1. Method in a parking assistance system for determining a parking space suitable for being parked in, having the following steps:
- detecting at least one object which is situated opposite a parking space;
- classifying the detected object as a static object or as a moving object; and
- selectively offering the parking space on the basis of the classification,
**characterized in that** the classification of the detected object is carried out on the basis of a contour line of the object which is detected while the parking space is being driven past.

2. Method according to Claim 1, in which the classification step is carried out in reaction to it being established that the detected object is blocking a parking trajectory into the parking space.

3. Method according to Claim 1 or 2, in which the contour line refers to the measured distance from the detected object while the parking space is being directly driven past.

4. Method according to one of Claims 1 to 3, in which the classification is carried out on the basis of a rectilinear course of the contour line.

5. Method according to Claim 4, in which the classification is carried out on the basis of a predefined threshold value which refers to a fluctuation width of the measured distances producing the contour line.

6. Computer program for carrying out the method according to one of the preceding claims when the computer program is executed on a programmable computer device.

7. Parking assistance system designed to determine a parking space suitable for being parked in, having the following components:
- a component for detecting at least one object which is situated opposite a parking space;
- a component for classifying the detected object as a static object or as a moving object; and
- a component for selectively offering the parking space on the basis of the classification,
**characterized in that** the classification of the detected object is carried out on the basis of a contour line of the object which is detected while the parking space is being driven past.

8. Parking assistance system according to Claim 8, which is designed for actively guiding a vehicle into the parking space.

9. Parking assistance system according to Claim 8 or 9, comprising an ultrasonic sensor system for object detection.

## Revendications

1. Procédé dans un système d'assistance au stationnement pour calculer une place de stationnement adaptée au stationnement, avec les étapes suivantes :
- détection d'au moins un objet opposé à une place de stationnement ;
- classement de l'objet détecté comme objet statique ou objet mobile ; et
- proposition sélective de la place de stationnement sur la base du classement ;
**caractérisé en ce que** le classement de l'objet détecté est réalisé sur la base d'une ligne de contour de l'objet détectée pendant la conduite en marche avant, au niveau de la place de stationnement.

2. Procédé selon la revendication 1, l'étape de classement étant réalisée en réaction à une détection indiquant que l'objet détecté bloque une trajectoire de stationnement sur la place de stationnement.

3. Procédé selon la revendication 1 ou 2, la ligne de contour concernant la distance de mesure de l'objet détecté pendant une conduite en marche avant en ligne droite.

4. Procédé selon l'une quelconque des revendications 1 à 3, le classement étant réalisé sur la base d'une trajectoire en ligne droite de la ligne de contour.

5. Procédé selon la revendication 4, le classement étant réalisé sur la base d'une valeur seuil prédéfinie concernant une largeur d'oscillation des distances de mesure donnant la ligne de contour.

6. Programme informatique de mise en oeuvre du procédé selon l'une quelconque des revendications précédentes, lorsque le programme informatique est exécuté sur un ordinateur programmable.

7. Système d'assistance au stationnement conçu pour calculer une place de stationnement adaptée au stationnement, avec les composants suivants :
- un composant de détection d'au moins un objet opposé à une place de stationnement ;
- un composant de classement de l'objet détecté comme objet statique ou objet mobile ; et
- un composant de proposition sélective de la place de stationnement sur la base du classement ;
**caractérisé en ce que** le classement de l'objet détecté est réalisé sur la base d'une ligne de contour de l'objet détectée pendant la conduite en marche avant, au niveau de la place de stationnement.

8. Système d'assistance au stationnement selon la revendication 8, conçu pour le guidage actif d'un véhicule dans la place de stationnement.

9. Système d'assistance au stationnement selon la revendication 8 ou 9, comprenant un système de détection à ultrasons utilisé pour la détection d'objet.
